# EUROPEAN PATENT APPLICATION

(11) **EP 2 157 779 A2**
(43) Date of publication of application: **24.02.2010**
(21) Application number: 09177573.4
(22) Date of filing: 24.12.2003
(51) Int. Cl.: H04N 1/21, H04N 1/00, G03B 17/00

(54) **Video/audio data recording/reproducing apparatus**

(30) Priority: 06.01.2003 KR 20030000656; 08.01.2003 KR 20030001166; 21.04.2003 US 464111 P; 26.11.2003 US 721507
(62) Divisional of application: 03258174.6
(71) Applicant: SAMSUNG ELECTRONICS CO., LTD., Suwon-si, Gyeonggi-do (KR)
(72) Inventor: Oguro, Masaki, Gyunggi-do (KR)
(74) Representative: Perkins, Dawn Elizabeth

(57) **Abstract**

A complex video/audio data recording/reproducing apparatus includes a body having a control unit, a data recording medium and a battery, a camera unit provided at a side of the body, a display unit variable in position with respect to the body, and an audio data processing unit. A control unit and a micro-compact hard disc drive used as a main data recording medium, interface features of various product units provided in the apparatus, such as a digital camcorder, a digital still camera, an MP3 player and a voice recorder, thereby providing a compact-sized and portable video/audio recording/reproducing apparatus realizing various functions.

## Description

The present invention relates to a video/audio data recording/reproducing apparatus including a hard disk drive as a data recording medium.

Generally, a digital still camera (DSC) converts an optical image incident on a sensor through a lens into a digital signal and stores the digital signal (i.e., stores a digital image). Such a digital still camera is highly compatible with personal computers (PC), the digital image is easy to edit and adjust and it is easy to transfer the digital images to a computer connected to a DSC. Also, digital still camera, having the same structure as a general camera, is easy to carry. The digital still camera is provided with a lens device, a memory device, a signal converting device and a display device. Due to a limited image recording capacity, the digital still camera is usually used for taking still pictures. Although digital still cameras can often take motion pictures up to a certain limited volume, taking motion pictures for a long period of time is almost impossible. The inability to record and reproduce moving pictures and an accompanying soundtrack limits the usefulness of digital still cameras.

Camcorders are widely-known image recording and reproducing devices which can record and reproduce moving pictures and accompanying soundtracks. Camcorders comprise with a lens device, a signal converting device, a deck device for recording and reproducing moving images and a display device. Camcorders usually uses a cassette tape as the recording medium for record video and can record over 1 hour of video. Furthermore, camcorders have microphone devices and speaker devices for audio input and output. Camcorders are also provided with a still image capture function. However, this tends to be with a low image quality compared with digital still cameras. Also, since camcorders have more complex functions that require a complex structure, they are bulky and more expensive than digital still cameras.

Accordingly, many people buy a digital still camera and a camcorder because one lacks the function or quality of the other. This places a financial burden on consumers. Additionally, users have to carry both a digital still camera and a camcorders which is quite inconvenient.

A digital camera apparatus, according to the first aspect of the present invention, is **characterised in that** the image data storage means comprises a hard disk drive.

Preferably, the hard disk-drive is a micro-compact hard disk drive.

Preferably, the apparatus has a housing having a side wall and a circuit board, and the hard disk drive is sandwiched between the circuit board and said side wall.

A digital camera apparatus, according to the second aspect of the present invention, comprises a body portion, a zoom control user input means, a substantially cylindrical camera portion housing an image sensor and having a zoom lens at one end, the zoom lens being controlled in accordance with operation of a zoom control, **characterised in that** the zoom control user input means is located at the end of the camera portion opposite the zoom lens.

Preferably, the zoom control user input means is a slider control. More preferably, the zoom control user input means is slidable along an arcuate path. Still more preferably, the centre of curvature of said path is substantially on the axis of the camera portion.

A digital camera apparatus, according to the third aspect of the present invention, including means for removably receiving a battery **characterised in that** said means comprises a relatively broad and shallow channel for receiving a slab-like battery.

Preferably, one end of the channel is open so that a battery can be slid longitudinally into the channel.

Preferably, the apparatus includes a cover removably covering said channel.

Preferably, the floor of said channel is parallel a side wall of the apparatus. More preferably, there are two parallel side walls, one of which is arranged with a circuit board to sandwich a hard disk drive.

A digital camera apparatus, according to a fourth aspect of the present invention, comprises an image sensor, storage means for storing image and audio data, a video signal input, a video signal output, an audio signal input, display means, user input means and control means, wherein the control means is responsive to various user inputs, input using the user input means, to:
store image signals from the image sensor means in the storage means;
store image signals from the video signal input in the storage means;
display image signals stored in the storage means using the display means;
output image signals stored in the storage means via the video output;
store image signals from the image sensor means in the storage means;
store audio signals from the audio signal input in the storage means; and
output audio signals stored in the storage means via the video output.

Preferably, the apparatus includes signal coding and decoding means for coding and decoding image signals being output and input respectively.

Preferably, the apparatus includes a codec for compressing image and/or audio signals being stored in the storage means. More preferably, the codec is also for decompressing image and/or audio signals being output from the storage means.

According to the fifth aspect of the present invention, there is provided an integrated circuit for an apparatus according to the fourth aspect of the present invention, the integrated circuit comprising a central processing unit, a codec, a DMA controller for controlling direct memory access to a random access memory and a bus interconnecting the central processing unit, the codec and the DMA controller.

Preferably, the integrated circuit includes an interface, for solid state removable media, connected to the bus.

Preferably, the integrated circuit includes a USB interface connected to the bus.

Preferably, the integrated circuit includes audio signal coding and decoding means having external connections and audio signal connections to the central processing unit independent of the bus.

Preferably, the integrated circuit includes user interface image data providing means and video output means for combining user interface image data with image data from the bus and outputting a composite image signal.

Preferably, the integrated circuit includes analogue-to-digital converter means for digitising analogue image signals and providing the resultant digital signals to the bus.

According to the sixth aspect of the invention, there is provided a video/audio data recording/reproducing apparatus, comprising:
a single chip controller controlling processing by at least two various function units as a digital camcorder, a digital still camera, a video recorder/reproducer, a data storage, an MP3 player and a voice recorder; and a micro-compact hard disc drive as a main data recording medium storing data of the various function units.

Preferably, the controller comprises:
a system bus;
a multiplexer/system resource controller in communication with the system bus and outputting image signals;
a motion picture experts group 4 compressor/decompressor in communication with the system bus and compressing/decompressing data of the function units;
a data recording medium interface in communication with the system bus and reading/writing data from/to a memory unit and the micro-compact hard disc drive;
a universal serial bus interface in communication with the system bus and receiving/transmitting the data of the function units;
a video processor in communication with the system bus and processing image signals input through the digital camcorder and still camera function units or input through an input terminal;
an audio encoder/decoder in communication with the system bus and processing input/output audio signals for the MP3 player and the voice recorder; and
a central processing unit controlling the controller via the system bus.

Preferably, the apparatus further comprise;
a body including the single chip controller and the micro-compact hard disk drive; and
a station communicatively receiving the body and providing a plurality of transmission/reception terminals allowing data transmission/reception between the body and external computing devices.

Preferably, the station and the body are communicatively connected via a connection terminal in the station and the body, respectively.

Preferably, the station comprises manipulation buttons controlling the function units while the body is seated on the station.

Preferably, the body further comprises a battery and the station recharges the battery power from an external power supply while the body is seated on the station.

Preferably, the station comprises a signal reception unit receiving operations signals from a remote controller to control the function units while the body is seated on the station.

Preferably, the apparatus further comprise a removable storage, wherein the body further comprises a window to check the removable storage connection.

According to a seventh aspect of the present invention, there is provided a video/audio data recording/reproducing apparatus, comprising:
a first housing having a receiving area facing inside of the apparatus and accommodating a hard disc drive and a circuit board;
a second housing in a parallel relation facing the receiving area of the first housing; and
a middle housing having a camera zoom button housing and supported in between the first and second housings to support a camera unit at a horizontal axial line of the camera zoom button housing in between the first and second housings.

Preferably, the first and second housings each comprises an integral casing area covering the camera unit supported by the middle housing.

Preferably, the camera zoom button housing is round and accommodated by the concave integral casing areas.

Preferably, the middle housing has a through opening to receive therein the circuit board.

Preferably, the middle housing is rectangular having two vertical side surfaces and at least one bottom horizontal surface and a through opening, and
increasing a width of the vertical and horizontal surfaces increases in the apparatus an interior receiving area comprising the first housing receiving area and the opening of the middle housing.

In any of the aspects of the present invention, the camera apparatus may be, but is not limited to, a camcorder, a digital still camera or a combined camcorder and digital still camera. However, the preferred embodiments are combined camcorder and digital still camera apparatuses.

An embodiment of the present invention will now be described, by way of example, with reference to the accompanying drawings, in which:
Figure 1 is a perspective view of a video and audio data recording and reproducing apparatus according to the present invention;
Figure 2 is a rear perspective view of the apparatus shown in Figure 1;
Figure 3 is an exploded perspective view of the apparatus shown in Figure 1;
Figure 4 is a rear perspective view of the main part of the apparatus shown in Figure 1;
Figures 5A and 5B are schematic perspective views showing the apparatus of Figure 1 in different configurations;
Figure 6 is a perspective view showing the apparatus of Figure 1 and a docking station therefor;
Figure 7 is a rear perspective view of the recording and reproducing apparatus connected to the docking station;
Figure 8 is a block diagram showing of the apparatus of Figure 1; and
Figure 9 is a functional block diagram of the control unit shown in Figure 8.

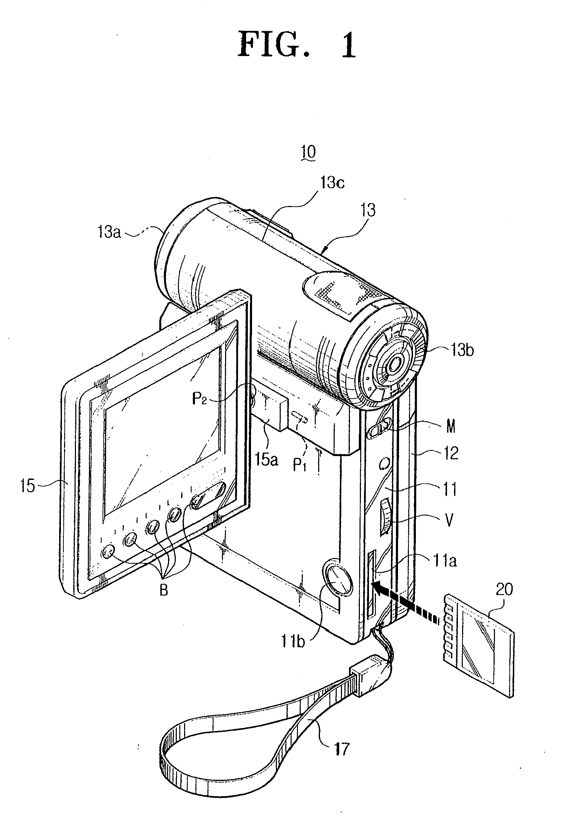

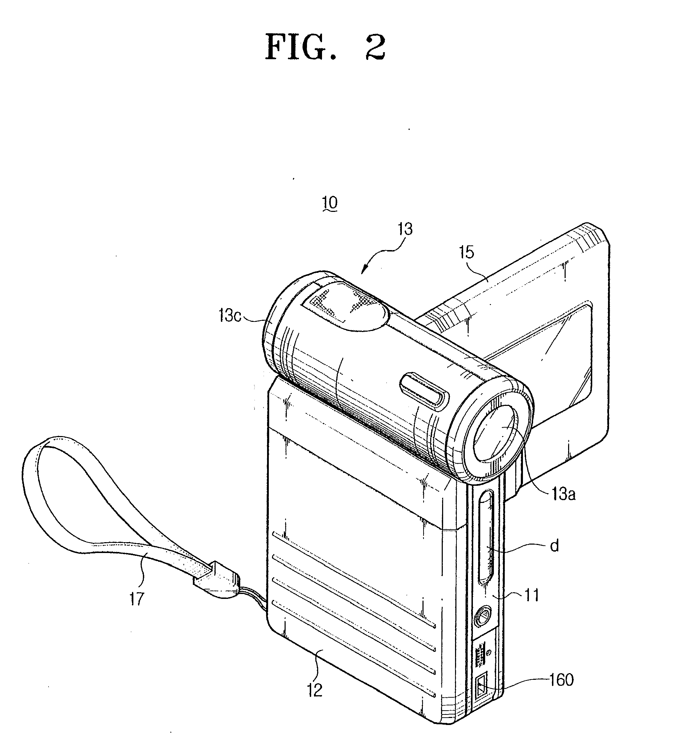

Referring to Figures 1 to 4, a video and audio data recording and reproducing apparatus 10, according to the present invention, comprises a body 11, a camera unit 13, a display unit 15 and a battery 30.

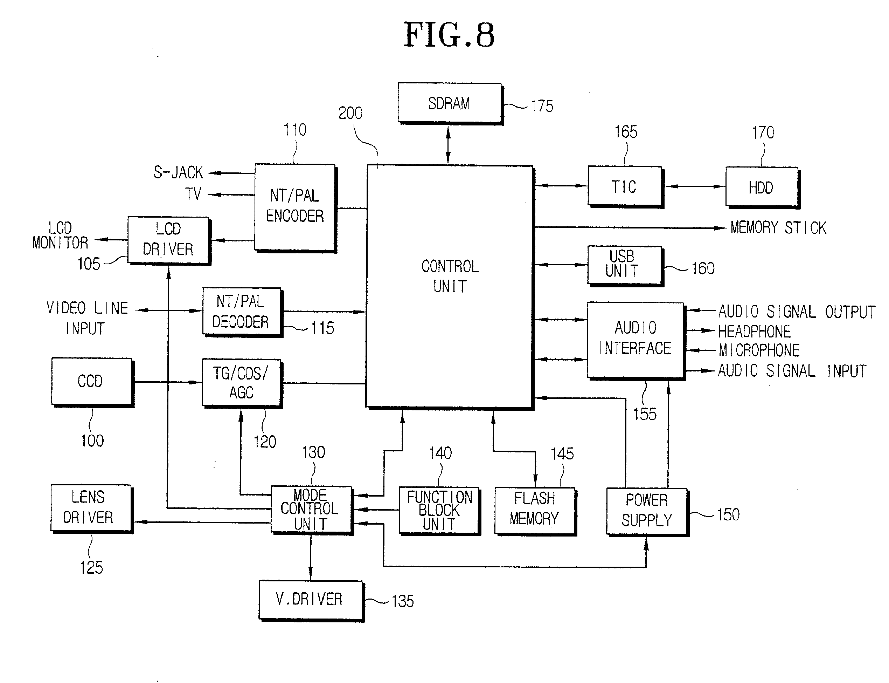

The body 11 comprises first, second and third housings 11d, 11e, 11f, and further includes a hard disk drive 170 built therein as the main data recording medium, and an audio data processing unit (not shown). A plurality of operating buttons are provided and a docking station (Figure 8) is provided which can respond to operation of the operation buttons.

A 1-inch compact hard disk drive is used as a main data recording medium. However, other types of hard disk drive may be used. The first and third housings 11d, 11f lie parallel to each other. With this arrangement, the body 11 can be compact while having a high data storage capacity.

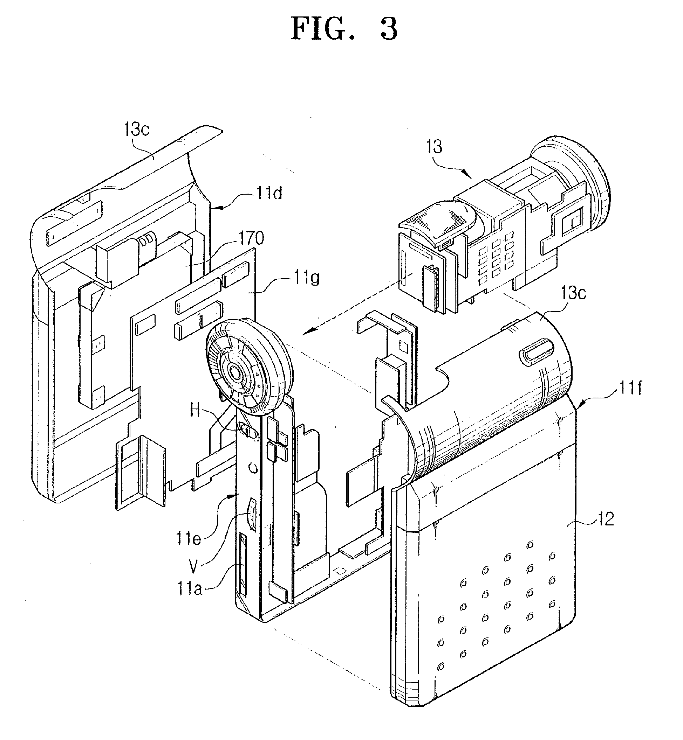

As shown in Figure 1, the body 11 is provided with a slot 11a in one of its sides, into which a removable storage medium 20, such as a smart card or a memory stick, can be inserted to provide supplementary data storage. Beside the above-mentioned storage media, other types of storages, such as flash memory 145 (Figure 8) or SDRAM 175 (Figure 8) can additionally be used. A window 11b is provided through which a user can check whether a removable storage medium 20 has been inserted into the slot 11a. A carrying strap 17 is attached to the body 11. Control buttons B, which are substantially same as those on a conventional digital camcorder, are provided on the display unit 15. A mode shifting switch M is provided on the body 11 and enables the user to change the operating mode of the apparatus, for example between camcorder mode, digital still camera mode and MP3 player mode. A thumb wheel V is provided for making adjustments, for example, to sound volume. A circuit board 11g (Figure 3) is located within the third housing 11d.

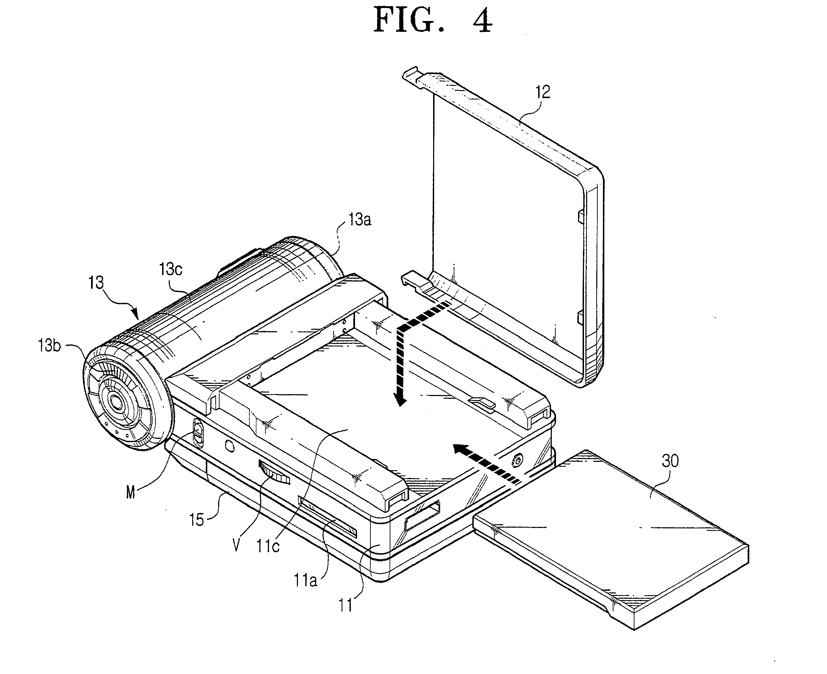

Referring specifically to Figure 4, a battery seat 11c is provided on the rear side of the body 11 for removably receiving a battery 30. The battery seat 11c and the battery 30, when installed, are covered by a removable rear side cover 12.

Typically, the camera unit 13 comprises an optical system comprising a lens 13a, a CCD 100 (Figure 8) for photoelectrically converting an optical image formed by the optical system, an outer casing 13c which is integrally formed on a side of the body 11 and externally covering the optical system, and a zoom button 13b formed on a side of the outer casing 13c at a position opposite to the lens 13a. The zoom button 13b can change a focal length of the lens 13a, and is resiliently supported on a side of the outer casing 13c to be slid along a circular-arc guide rail (not shown) formed on the side of the outer casing 13c in the direction arrowed in Figure 1.

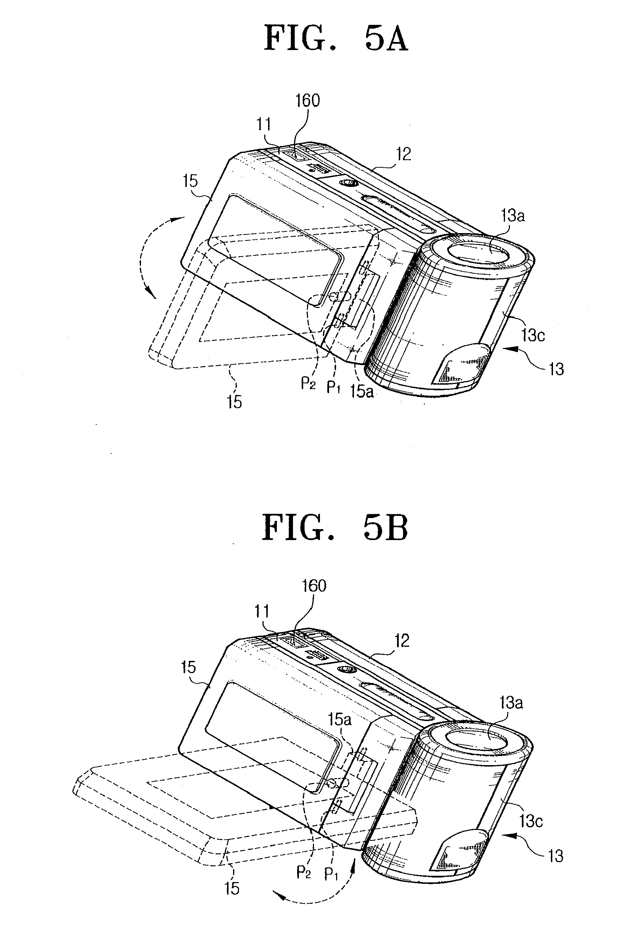

Referring to Figures 5A and 5B, the display unit 15 is connected to the body 11 in a manner such that the display unit 15 can rotate with respect to the body 11 about a pair of orthogonal axes P1, P2. The display unit 15 is pivotably supported on a rotary block 15a which can be folded against the body 11. The display unit 15 uses an LCD screen which functions as a viewfinder during image capture and displays recorded images from internal, e.g. the hard disk drive, and external sources at other times. As the display unit 15 is rotatably mounted on the body 11 so that it can be rotated about the two axes P1, P2, a user holding the body 11 can view, for example, video being displayed by the display unit 15 at various positions.

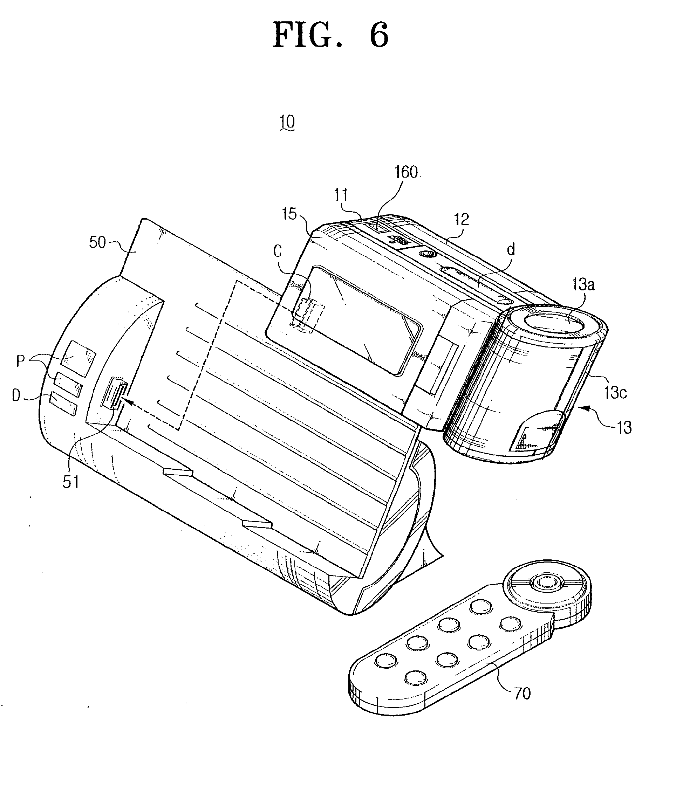

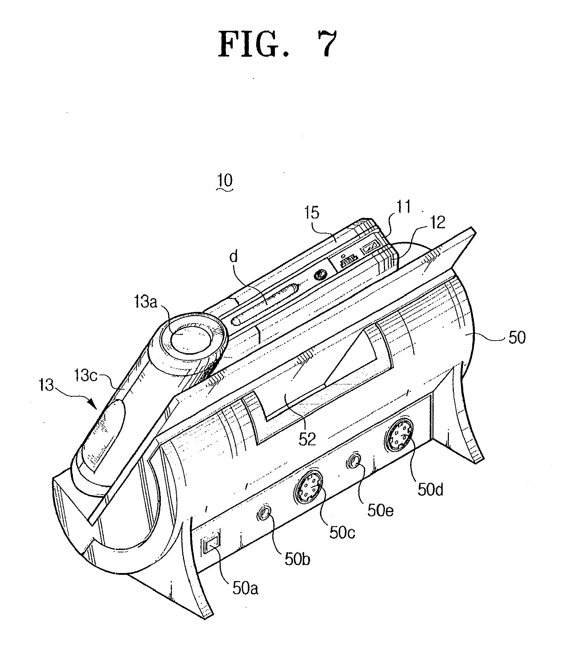

Referring to Figures 6 and 7, the body 11 of the video and audio recording and reproducing apparatus is connectable with external data processors or apparatus, such as TV sets, hi-fi systems, etc. for signal transmission and reception, battery charging, etc. For example, as shown in Figure 6, a docking station 50 receives the body 11. The docking station 50 is provided with a plug 51 which is received by a socket C, provided in a side of the body 11, when the body 11 is mounted to the docking station 50. The battery 30 (Figure 3) can be connected to the station 50 for charging. The battery 30 can be charged while in the body 11 by external supplied via the plug 51. The plug 51 and socket C additionally facilitate the communication of signals between the docking station 50 and the body 11.

Referring specifically to Figure 7, a battery recharging unit (battery charger) 52 can receive the battery 30 for charging.

A plurality of sockets 50a, 50b, 50c, 50d, 50e, such as S-VHS and AV sockets, enable the docking station 50 to be other video and audio apparatuses and data processing apparatus. The sockets 50a, 50b, 50c, 50d, 50e are connected to the plug 51. Accordingly, when the body 11 is mounted on the station 50, signal transmission and reception with external data processors and audio and video apparatuses is possible.

A set of control buttons enable the body 11 to be controlled while it is mounted to the docking station. The control buttons P are connected to the plug 51 for signal transmission and reception and thus it is possible to control the operation of the body 11 using the control buttons P. The control buttons P provide the control functions of buttons and other controls on the body 11 that are inaccessible when the body 11 is mounted to the docking station 50, e.g. the mode setting buttons and the thumb wheel V.

In Figure 6, infrared receivers D and d, provided respectively in the station 50 and at the body 11, receive control signals from a remote controller 70. The docking station infrared receiver D is connected to the plug 51 of the station 50 for signal transmission to the body 11, when the body 11 is mounted on the station 50, so that the body 11 can be remotely controlled through operation of the remote controller 70.

Referring to Figure 8, the video and audio data recording and reproducing apparatus 10 comprises a CCD (charge coupled device) image sensor 100, an LCD driver 105, an NTSC/PAL encoder 110, an NTSC/PAL decoder 115, a TG/CDS/AGC (timing generation/correlated double sampler/auto gain control) unit 120, a lens driver 125, a mode control unit 130, a Video driver 135, a function block unit 140, a flash memory 145, a power supply 150, an audio interface 155, a USB unit 160, a TIC (transition IC) 165, an HDD (hard disk drive) 170, an SDRAM (synchronous dynamic random access memory) 175 and a control unit 200.

As described above, the CCD image sensor 100 converts an optical image input, received through the lens 13a, into an electric signal and outputs the electric signal to the TG/CDS/AGC 120. In other words, the optical image of a scene is focused on the photosensitive surface of the CCD image sensor 100 by the lens 13a and the CCD image sensor 100 converts the optical image on the photosensitive surface into an electric signal and outputs the electric signal as a 1-dimensional electric signal by means of horizontal and vertical scanning.

The LCD driver 105 controls the LCD monitor 13 of the display unit 15. The NTSC/PAL encoder 110 converts signals output from the control unit 200 into NTSC or PAL video signals and outputs the resultant signal to an output terminal, such as one of the sockets 50a-50e. The NTSC/PAL decoder 115 converts NTSC or PAL signals, input through the video line input terminal, into digital data and transmits the converted data to the control unit 200.

The TG/CDS/AGC 120 removes noise from the CCD image sensor 100 signal using a correlated double sampling circuit, and transmits the signal, which has passed an automatic gain control circuit, to the control unit 200. The lens driver 125 controls the lens 13a to adjust various lens parameters, such as focal length and aperture, as desired. The V.driver 135 is a vertical driver of the CCD 100 and the mode control unit 130 controls the LCD driver 105, the lens driver 125 and the V.driver 135 according to the mode selected by the user.

The function block unit 140 stores operation information about the operation which the user has selected by manipulating the operating buttons of the apparatus 10, such as the buttons B and P, and sends the operation information to the mode control unit 130 so that the apparatus 10 is operated in accordance with the selected operation information.

The flash memory 145 stores programs, such as a system program necessary for booting the apparatus and the apparatus operation, critical data which has to be maintained even after a power-off, and application programs. The power supply 150 supplies power for the operation of the apparatus 10. The audio interface 155 performs interfacing for the input and output of audio signals, e.g. to headphones and from microphones. The USB (universal serial bus) unit 160 is a serial port by which the apparatus 10 can be connected to an external computer (computing device), an audio player and/or a printer, with a plug-and-play interface.

The TIC (transition IC) 165 provides an interface between the control unit 200 and the HDD 170 and the HDD 170 stores data which has been compressed by the control unit 200. The SDRAM 175 serves as a buffer where data necessary for operating the apparatus 10 is stored.

The control unit 200 performs signal conversion, such as A/D conversion, on the input signals from the TG/CDS/AGC 120 and from the NTSC/PAL decoder 115 (i.e., signals input from the video line input). The control unit 200 compresses the converted data input from the TG/CDS/AGC 120 and the NTSC/PAL decoder 115, the audio interface 155 and the USB unit 160, and stores the compressed data in the HDD 170 through the TIC 165. A memory stick may be used as the storage medium instead of the HDD 170. During reproduction, the control unit 200 reads the data stored in the HDD 170 and outputs the read data, for example, to the NTSC/PAL encoder 110 or to the audio interface 155. The docking station 200 also controls other operations of the apparatus 10.

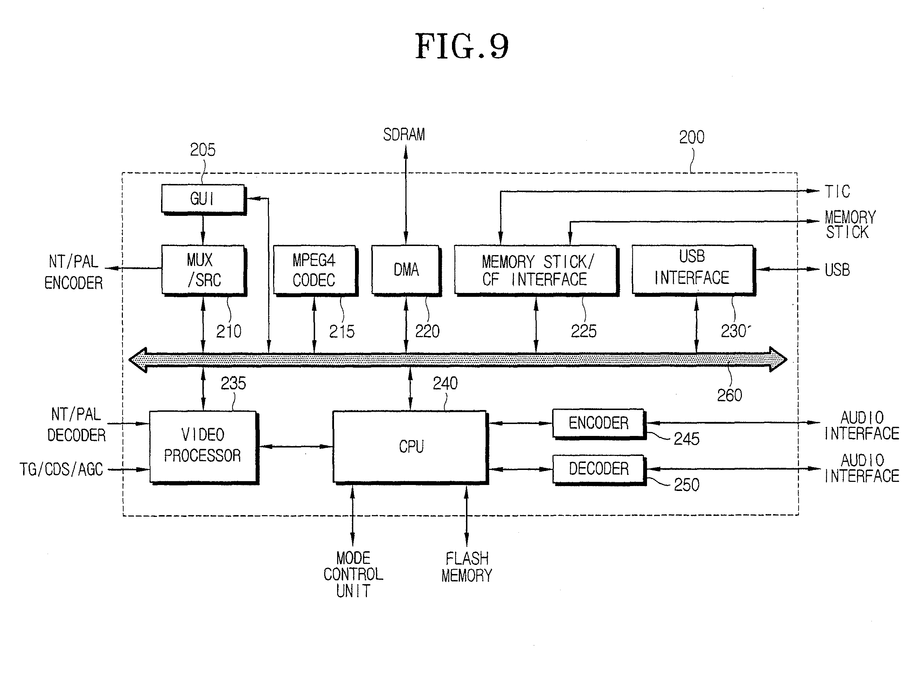

Referring to Figure 9, the control unit 200 comprises a GUI 205, a MUX/SRC (multiplexer/system resource controller) 210, a MPEG4 (Motion Picture Experts Group 4) codec 215, a DMA controller 220, a memory interface 225, a USB interface 230, a video processor 235, a CPU 240, an audio encoder 245, an audio decoder 250 and a system bus 260, all of which are preferably integrated into a single chip to enable compactness of the video and audio data recording and reproducing apparatus. The GUI 205 stores data, such as graphic data required for establishment of the GUI (Graphical User Interface) environment, and the MUX/SRC 210 controls the data output to the NTSC/PAL encoder 110 and, if necessary, may output the data mixed with the data from in the GUI 205.

The MPEG-4 codec 215 compresses the incoming data according to the MPEG-4 specification and, if necessary, decompresses MPEG-4 data. MPEG-4 codes video signals based on the content of the video instead of using blockwise coding as in the H.261, JPEG, MPEG-1 and MPEG-2 specifications.

The USB interface 230 interfaces with the USB unit 160. The video processor 235 performs signal conversion, such as the A/D conversion on incoming signals from the TG/CDS/AGC 120, and transmits to the system bus 260 either the converted data or the data input through the NTSC/PAL decoder 115. The audio encoder 245 and the audio decoder 250, respectively, perform the encoding and decoding necessary for the data transmission and reception via the audio interface 155. The GUI 205, the MUX/SRC 210, the MPEG-4 codec 215, the DMA 220, the memory interface 225, the USB interface 230, the video processor 235 and the CPU 240 are interconnected by the system bus 260, and the CPU 240 controls the overall operation of the control 200. For compactness, the control unit 200 is formed as a single chip.

Accordingly, the video and audio data recording and reproducing apparatus of the present invention can efficiently perform various functions, and the following description is of the apparatus 10 operating as a digital camcorder.

The CCD image sensor 110 outputs an electric signal, representing the image focused on it by the lens 13a, to the control unit 200 via the TG/CDS/AGC unit 120. The video processor 235 of the control unit 200 converts the incoming analogue video signal into a digital signal and transmits the digital signal to the MPEG-4 codec 215 across the system bus 260. The MPEG-4 codec 215 compresses the received digital data into MPEG-4 format and transmits the compressed data to the memory interface 225. The memory stick/CF interface 225 stores the received compressed data in the HDD 170 through the TIC 165. As a result, images of the scene are recorded.

On reproduction, the compressed data, stored in the HDD 170, is provided to the MPEG-4 codec 215 via the TIC 165 by the memory interface 225 via the TIC 165 and transmitted to the NTSC/PAL encoder 110 through the MUX/SRC 210. The NTSC/PAL encoder 110 displays the received signals on the LCD monitor 13 mounted on the body 11 through the LCD driver 105. Furthermore, the images captured may be displayed on an external display device by transmitting the signals to the TV or an S-JACK (super JACK) socket among the sockets 50a-50e (Figure 7). Accordingly, the captured moving images or still images are reproduced.

Inputs through the external video line are transmitted to the control unit 200 through the NTSC/PAL decoder 115 and compressed and stored in the HDD 170 through the above-described processes. When necessary, the data can be read from the HDD 170 and reproduced. Therefore, content displayed using a TV may be recorded and reproduced by the apparatus 10, because the HDD 170 provides a high data storage capacity. Furthermore, it is possible to display the scene currently being captured without data compression, i.e. by directly outputting the data captured through the lens 13a to the NTSC/PAL encoder 110.

In the video and audio data recording and reproducing apparatus 10 operating as a voice recorder or an MP3 player, audio data input through the audio interface 155 is compressed by the MPEG-4 codec 215 and stored in the HDD 170 through the TIC 165 or in the memory stick. The audio signals stored in storage media, such as the HDD 170, is provided to the MPEG-4 codec 215 by the memory interface 225 via the TIC 165 and transmitted through the audio interface 155 to headphones or another external audio device.

The video and audio data recording and reproducing apparatus may also be connected to an external computer through the USB unit 160, to receive data and/or transmit data to the external computer. Accordingly, the HDD 170, by providing a high storage capacity, allows the video and audio data recording and reproducing apparatus to operate as a data storage device. The video and audio data recording and reproducing apparatus may be also used for other functions, such as a web camera if connection to the computer with the USB unit 160.

As described above, the video and audio data recording and reproducing apparatus can serve various functions, such as the functions of a camcorder, a digital still camera, a voice recorder, an MP3 player, a data storage device and a web camera, and many others in various fields. Because the video and audio data recording and reproducing apparatus can be provided as a single package of video and image data processors, such as a camcorder processor and a digital camera processor, along with audio data processors, such as an MP3 player and a voice recorder, compactness is achieved. In particular, the video and audio data recording and reproducing apparatus of the present invention can serve various functions at an economic cost.

The apparatus controller may be constructed as a single chip and control data processing among various data processors implementing various apparatus functions and a micro-compact HDD, thereby providing consumers a more compact, easy to carry and more multi-function apparatus. Furthermore, the video and audio data recording and reproducing apparatus can be used not only portably, but also as a stationary set when mounted to the docking station. The docking station may control various units of the apparatus and a micro-compact hard disc drive may be the main data recording medium, allowing integration into a single apparatus of features of the various products, such as digital camcorders, digital still cameras, video recorder and reproducer, data storage, MP3 player and a voice recorder. Preferably, the control unit is a single chip.

## Claims

1. A video/audio data recording/reproducing apparatus comprising:
a housing;
an image capturing unit to capture a still image or moving video;
a video codec compressing the captured moving video to compressed digital moving video data or decompressing the compressed digital moving video data into uncompressed digital moving video data;
a storage to store data;
a display unit disposed in the housing for displaying the captured still image or moving video;
an internal microphone disposed in the housing to capture voice;
an audio encoder/decoder performing encoding the captured voice; and
a controller in communication with the image capturing unit to capture a still image or moving video, in communication with the video codec to compress the captured moving video to compressed moving video data, in communication with the internal microphone to capture voice, in communication with the audio encoder/decoder to encode the captured voice, and in communication with the storage to store the compressed moving video data or the encoded voice data.

2. The device of claim 1, further comprising a communication interface for receiving and transmitting data with respect to an external device.

3. The device of claim 2, wherein the display unit is a flat panel display.

4. The device of claim 1, wherein the storage comprises an external, replaceable storage unit and an internal storage unit.

5. The device of claim 3, wherein one of a video capturing mode, a photograph capturing mode, a video reproducing mode, a photograph reproducing mode, an audio capturing mode, and an audio reproducing mode is driven in correspondence to an operation selected by a user.

6. The device of claim 1 further comprising an input interface for receiving an input video signal.

7. The device of claim 1 further comprising a battery, wherein electrical power can be supplied from the battery pack to the housing.

8. The device of claim 1 further comprising a headphone interface disposed in the housing that permits at least the captured voice data to be played through external headphones connected thereto;

9. The device of claim 7 further comprising a multi-media cradle adapted to receive the device, comprising:
a housing unit;
a cradle for seating the device such that the multi-media cradle can be electrically coupled with the device via a system bus line and the device can recharge its battery when seated in the cradle; and
a plurality of data ports mounted to the housing unit that allows the multi-media cradle to be coupled with a variety of peripheral devices.

10. The device of claim 1, further comprising a plurality of connection terminals installed on an outer circumference of the housing so as to be electrically connected with a variety of peripheral devices.

11. The device of claim 3, wherein the display unit can perform a viewfinder function displaying an object when capturing the still image or moving video and enable viewing of pre-stored video data of the storage, the pre-stored video data being the captured moving video or external video data received from the external device.

12. The device of claim 5 further comprising a zoom interface for the video capturing mode or the photograph capturing mode.

13. The device of claim 5 further comprising at least one operation mode shifting interface is provided on the display unit to allow the user to select the operation.

14. A multimedia recording/playback device with integrated digital image capturing device for record and playback of audio and still/moving image, the device comprising:
an integrated housing;
an audio input unit for converting an input voice into a digital voice data;
an audio playback unit for converting at least the digital voice data into a corresponding audible sound for a user of the device;
an audio CODEC for compressing uncompressed digital voice data into compressed digital voice data and concurrently decompressing a compressed digital voice data into the uncompressed digital voice data;
an image input unit for capturing a still/moving video image;
an image CODEC for compressing a captured image data frame into a compressed digital image data frame and concurrently decompressing a compressed digital image data frame into an uncompressed digital image data frame;
an image display disposed in the housing;
a communication interface for receiving and transmitting data with respect to an external electronic device;
a local data read and write unit for storing the compressed digital voice data or the compressed digital image data frame;
a user-control means for accepting user controls of the device directing its operations; and
a single chip system controller for interfacing with and further controlling the image input unit, the audio CODEC, the image CODEC, the image display, the local data read and write unit, the communication interface and the user-control means to perform a plurality of desirable functions with respect to the recording/plavback and transmission and receiving of the audio and video data.
